# EUROPEAN PATENT SPECIFICATION

(11) **EP 3 550 008 B1**
(45) Date of publication and mention of the grant of the patent: **04.12.2024**
(21) Application number: 18165909.5
(22) Date of filing: 05.04.2018
(51) Int. Cl.: C12J 1/08

(54) **VINEGAR WITH AGED TASTE, PROCESS FOR PREPARING VINEGAR WITH AGED TASTE, AND METHOD OF ADDING AGED TASTE TO VINEGAR**
ESSIG MIT GEALTERTEM GESCHMACK, VERFAHREN ZUR HERSTELLUNG VON ESSIG MIT GEALTERTEM GESCHMACK UND VERFAHREN ZUR ZUGABE VON GESCHMACK ZU ESSIG
VINAIGRE PRÉSENTANT UN GOÛT VIEILLI, PROCÉDÉ DE PRÉPARATION DE VINAIGRE PRÉSENTANT UN GOÛT VIEILLI ET PROCÉDÉ D'ADDITION DE GOÛT VIEILLI À DU VINAIGRE

(43) Date of publication of application: 09.10.2019
(73) Proprietor: Mizkan Holdings Co., Ltd., Handa-shi, Aichi 475-8585 (JP)
(72) Inventor: Takeshi, Ono, Handa-shi, Aichi 475-8585 (JP)
(74) Representative: Mewburn Ellis LLP

(56) References cited:
- CN-A- 107 858 258
- JP-A- S6 287 083
- US-A- 4 701 336
- NATERA MARN R ET AL: "Headspace solid-phase microextraction analysis of aroma compounds in vinegar - Validation study", JOURNAL OF CHROMATOGRAP, ELSEVIER, AMSTERDAM, NL, vol. 967, no. 2, 23 August 2002 (2002-08-23), pages 261 - 267, XP004372061, ISSN: 0021-9673, DOI: 10.1016/S0021-9673(02)00786-0
- CEJUDO-BASTANTE CRISTINA ET AL: "Chemical and sensory characteristics of orange based vinegar", JOURNAL OF FOOD SCIENCE AND TECHNOLOGY, SPRINGER (INDIA) PRIVATE LTD, INDIA, vol. 53, no. 8, 18 August 2016 (2016-08-18), pages 3147 - 3156, XP036072524, ISSN: 0022-1155, [retrieved on 20160818], DOI: 10.1007/S13197-016-2288-7

## Description

### BACKGROUND OF THE INVENTION

Vinegar is a seasoning widely used for adding sour taste to foods. However, some consumers dislike strong pungent smell of vinegar, which originates mostly from acetic acid. There is a demand for means to effectively reduce the pungent smell of vinegar for improving its flavor.

Various researches have been reported so far concerning means to effectively reduce the pungent smell of vinegar. JP2016-007208A, for example, discloses a method for reducing the acid odor of vinegar by processing the vinegar with a wet-type pulverizer. JP-H6-339365A (1994), as another example, discloses a process for preparing vinegar with reduced pungent smell and sour taste by treating vinegar mash containing fatty acid ethyl esters and plant proteins with acetic acid bacteria and yeasts.

Natera Marn R et al, "Headspace solid-phase microextraction analysis of aroma compounds in vinegar - Validation study", Journal of Chromatograpy, 2002, vol. 967, no. 2, pages 261 - 267, concerns evaluation of headspace solid-phase microextraction for analysing aromatic compounds in vinegar. Cejudo-Bastante Cristina et al, "Chemical and sensory characteristics of orange based vinegar", Journal of Food Science and Technology, 2016, vol. 53, no. 8, pages 3147 - 3156, concerns an orange based vinegar developed by surface culture. JP S62-87083 A concerns a method of manufacturing an edible vinegar comprising succinic acid by subjecting an unrefined vinegar containing fumaric acid to acetic acid fermentation to form acetic acid and converting the fumaric acid into succinic acid. US 4701336 A concerns a flavoring composition comprising diethyl succinate, beta-phenethyl formate and beta-phenethyl alcohol.

However, the conventional techniques are not sufficiently effective in reducing pungent smell, require complicated processes, and/or involve significant costs.

### PROBLEM TO BE SOLVED BY THE INVENTION

The present inventors conducted extensive study, and have finally arrived at an idea of including diethyl succinate and benzaldehyde into vinegar and adjusting their concentrations to within specific ranges, and have found that the resultant vinegar not only exhibits reduced pungent smell while maintaining the flavor characteristic of vinegar, but also has desired deep flavor and aged taste as if it had been matured for a long time.

The present invention relates to a vinegar composition produced from distilled alcohol and/or grain and/or malt via fermentation according to claim 1, to a process for producing a vinegar composition from distilled alcohol and/or grain and/or malt via fermentation according to claim 6, and to use according to claim 11.

### EFFECTS OF THE INVENTION

The present invention allows preparation of vinegar not only exhibiting reduced pungent smell but also having aged taste, by simply including diethyl succinate and benzaldehyde into vinegar.

### DETAILED DESCRIPTION OF THE INVENTION

The invention will now be described in greater detail by reference to specific embodiments thereof. However, it is to be understood that the invention should in any way be restricted to the following embodiments, and various modifications thereof may be implemented.

The vinegar according to the present invention is characterized by containing diethyl succinate (CAS No. 123-25-1) and benzaldehyde (CAS No. 100-52-7) in predetermined amounts, and may also optionally contain phenethyl acetate and isoamyl acetate in predetermined amounts. Inclusion of diethyl succinate and benzaldehyde, as well as phenethyl acetate (CAS No. 103-45-7) and isoamyl acetate (CAS No. 123-92-2) which may optionally be used (these four ingredients may also collectively be referred to as "relevant ingredients" hereinafter), into vinegar can be achieved either by adding these compounds or ingredients containing these compounds externally or by production of these ingredient via fermentation.

Examples of vinegars to be subject to the present invention include, although not limited to: malt vinegar, which is made of malted barley; wine vinegar, which is made of wine; grain vinegars such as rice vinegar, sake lees vinegar, rice black vinegar, wheat vinegar; fruit vinegars such as apple vinegar and balsamic vinegar; brewed vinegars such as spirit vinegars, which are manufactured from distilled alcohol as raw material; and distilled vinegars, which are prepared via distillation of brewed vinegars. Other examples include spiced vinegars, which are prepared from brewed vinegars or distilled vinegars by adding plant-derived ingredients containing aroma constituents such as spices and herbs. Still other examples include synthetic vinegars, which are prepared by adding seasonings to chemically synthesized acetic acid. Examples of vinegars to which aged taste should preferably be added include: spirit vinegars, which do not substantially contain any ingredients in such amounts as to significantly block the effects of the relevant ingredients; and grain and malt vinegars, which contain well-mellowed fragrant ingredients derived from grains and malts. A preferred example is malt vinegar, since well-mellowed fragrant ingredients derived from malts can act cooperatively with the relevant ingredients.

Examples of raw materials for vinegars include, although not limited to: fruits such as berries, grapes, and apples; fruit liquors such as apple ciders and wines; distilled alcohols derived from agricultural products; grains such as wheat and rice; and malt. Preferable raw materials for vinegars include distilled alcohols and raw materials derived from grains or malt. Preferred example are raw materials derived from malts, since well-mellowed fragrant ingredients derived from malts can act cooperatively with the relevant ingredients.

Examples of ingredients of vinegars include, although not limited to: inorganic salts such as phosphates and ammonium salts, which act as a source of nutrients for acetic acid bacteria that cause fermentation; saccharides such as honey, sugar, and liquid sugar; and various food additives.

Examples of spices that can be used for vinegars include, although not limited to: chili pepper, red pepper, black pepper, cayenne pepper, white pepper, pink pepper, sansho pepper (Japanese pepper), long pepper, wasabi, mustard, ginger, horseradish, citrus fruit skin, nutmeg, cinnamon, paprika, cardamom, garlic, cumin, turmeric, coriander seed, saffron, allspice, clove, shiso (Japanese basil), fennel, licorice, fenugreek, dill seed, and olive fruit. These spices may be used either singly or in combination of any two or more thereof.

Examples of herbs that can be used for vinegars include, although not limited to: cress, coriander, celery, tarragon, warabi (bracken), zenmai (flowering fern), green tea leaf, chive, chervil, mustard leaf, sage, thyme, laurel, basil, parsley, oregano, rosemary, peppermint, savory, lemongrass, dill, and wasabi leaf. These herbs may be used either singly or in combination of any two or more thereof.

The vinegar according to the present invention can be produced via any conventional processes, including processes based on fermentation such as acetic acid fermentation and processes involving synthesis. Examples of fermentation-based processes include, although not limited to: surface fermentation process using wooden buckets; submerged fermentation process; and packed-tower fermentation process. Examples of synthesis-based processes include, although not limited to: a process involving chemically synthesizing glacial acetic acid and then adding seasonings thereto., Fermentation-based processes are preferred according to the present invention, since the resultant vinegars contain a wide variety of ingredients derived from acetic acid fermentation.

The vinegar according to the present invention should preferably has an acetic acid acidity of 4.0% by weight or higher, more preferably 4.2% by weight or higher. If the acetic acid acidity is below the lower limit mentioned above, then the pungent smell of acetic acid exhibited by the resultant vinegar is sufficiently weak even without the application of the present invention. On the other hand, the acetic acid acidity of the vinegar according to the present invention should preferably be 10% by weight or lower, more preferably 8% by weight or lower, still more preferably 6% by weight or lower. If the acetic acid acidity exceeds the upper limit mentioned above, then the pungent smell of acetic acid exhibited by the resultant vinegar is too strong to be overcome by the application of the present invention. In the present invention, the term "% by weight" refers to weight % by weight of the vinegar composition.

The vinegar according to the present invention contains diethyl succinate and benzaldehyde. Inclusion of diethyl succinate and benzaldehyde into vinegar serves not only to reduce strong pungent smell characteristic of acetic acid, but also to provide the vinegar with aged taste as if it had been matured for a long time.

Inclusion of diethyl succinate and benzaldehyde into vinegar can be achieved by any methods, including addition of diethyl succinate and benzaldehyde to vinegar as single substances and production of diethyl succinate and benzaldehyde via fermentation-based process. In the latter case, a single fermentation product may be used singly, or two or more fermentation products may be used in mixture. Among them, production of diethyl succinate and benzaldehyde via fermentation-based process is more preferred, since it also increases other fragrant ingredients relating to aged taste.

The concentration of diethyl succinate (x) in the vinegar according to the present invention should be 0.1mg/L or higher, more preferably 0.2mg/L or higher. If the concentration of diethyl succinate is lower than the lower limit mentioned above, then the pungent smell of acetic acid may not sufficiently be suppressed, and/or aged taste may not sufficiently be added to vinegar. On the other hand, the concentration of diethyl succinate (x) should be 4.0mg/L or lower, more preferably 2.0mg/L or lower, still more preferably 1.5mg/L or lower. If the concentration of diethyl succinate exceeds the upper limit mentioned above, then not only the pungent smell but also desirable flavors of vinegar may be suppressed, making the resultant vinegar taste incongruent.

The concentration of benzaldehyde (y) in the vinegar according to the present invention should be 0.15 mg/L or higher, more preferably 0.2mg/L or higher, more preferably 0.25mg/L or higher. If the concentration of benzaldehyde is lower than the lower limit mentioned above, then the resultant vinegar may not exhibit sufficient rich flavors constituting aged taste. On the other hand, the concentration of benzaldehyde (y) should be 2.0mg/L or lower, more preferably 1.5mg/L or lower, still more preferably 1.0mg/L or lower. If the concentration of benzaldehyde exceeds the upper limit mentioned above, then the resultant vinegar may exhibit the smell of benzaldehyde and taste incongruent.

The concentration ratio of diethyl succinate to benzaldehyde (x/y) in the vinegar according to the present invention should preferably be 0.1 or higher, more preferably 0.2 or higher, and should preferably be 20 or lower, more preferably 12 or lower. If the ratio (x/y) is lower than the lower limit mentioned above, then benzaldehyde may negate the effect of diethyl succinate in suppressing pungent smell. On the other hand, if the ratio (x/y) exceeds the lower limit mentioned above, then diethyl succinate may negate the effect of benzaldehyde in adding rich flavors.

The vinegar according to the present invention should preferably contain phenethyl acetate. In this aspect, the concentration of phenethyl acetate (z) in the vinegar according to the present invention should preferably be 1.5mg/L or higher, more preferably 2.0mg/L or higher, more preferably 2.5mg/L or higher. If the concentration of phenethyl acetate is lower than the lower limit mentioned above, then the resultant vinegar may not exhibit gorgeous fragrance constituting desired flavors. On the other hand, the concentration of phenethyl acetate (z) should preferably be 10mg/L or lower, more preferably 8.0mg/L or lower, still more preferably 6.0mg/L or lower. If the concentration of phenethyl acetate exceeds the upper limit mentioned above, then the resultant vinegar may exhibit the smell of phenethyl acetate and taste incongruent.

The concentration ratio of diethyl succinate to phenethyl acetate (x/z) in the vinegar according to the present invention should preferably be 0.04 or higher and should preferably be 2.00 or lower, more preferably 1.40 or lower.

If the ratio (x/z) is lower than the lower limit mentioned above, then the gorgeous fragrance of phenethyl acetate may negate the effect of diethyl succinate in adding rich flavors. On the other hand, if the ratio (x/z) exceeds the lower limit mentioned above, then extra diethyl succinate may disturb the good balance of flavors of vinegar.

The vinegar according to the present invention should preferably contain isoamyl acetate. In this aspect, the concentration of isoamyl acetate in the vinegar according to the present invention should preferably be 2.0mg/L or higher, more preferably 2.5mg/L or higher. If the concentration of isoamyl acetate is lower than the lower limit mentioned above, then the resultant vinegar may not exhibit sufficient sweet aroma supporting aged taste. On the other hand, the concentration of isoamyl acetate should preferably be 10mg/L or lower, more preferably 8.0mg/L or lower, still more preferably 6.0mg/L or lower. If the concentration of isoamyl acetate exceeds the upper limit mentioned above, then the resultant vinegar may exhibit the smell of isoamyl acetate and taste incongruent.

The vinegar according to the present invention is produced via a fermentation step, more preferably via an acetic acid fermentation step. A fermentation step is carried out using distilled alcohol and/or raw materials derived from grains and/or malts, following any one of the processes prescribed in British Standard BS EN 13188:2000, under sections "2.4 spirit vinegar", "2.5 grain vinegar", "2.6 malt vinegar", and "2.7 distilled malt vinegar", to produce a brewed vinegar. A brewed vinegar thus-produced may be combined with plant-derived ingredients containing aroma constituents such as spices and herbs to prepare a spiced vinegar. It should be appreciated that the term "derived from" used in, e.g., an expression that a vinegar is "derived from" a raw material means that the vinegar may either be produced directly from the raw material via fermentation, or be obtained indirectly by treating the fermentation product of the raw material, such as adding spices thereto.

According to the present invention, the concentrations of diethyl succinate, benzaldehyde, phenethyl acetate, and isoamyl acetate may be measured using any known methods commonly used for fragrant ingredients, including a gas chromatography-mass spectroscopy (GC/MS) apparatus.

According to the present invention, the acetic acid acidity of a vinegar sample should be determined by titrating the sample using a sodium hydroxide solution until the pH value reaches 8.2, determining the amount of acetic acid based on the amount of the sodium hydroxide solution used for the neutralization so far, and calculating the acidity based on the amount of acetic acid. The titration may be carried out in any manner, e.g., either manually or using an automatic titrator, as long as it complies with the standard method for titrating acidity prescribed in British Standard BS EN 13188:2000.

### EXAMPLES

The present invention will then be explained in further details by reference to the examples below, which are presented for the purpose of illustration only and should in no way be construed as limiting the present invention.

### Preparation of vinegars without the addition of relevant ingredients

A sample used as Example a1 was a malt vinegar (acetic acid acidity: 5.0wt%), which was brewed in accordance with the method prescribed in British Standard BS EN 13188:2000 under section "2.6 malt vinegar".

A sample used as Example a2 was a spiced malt vinegar (acetic acid acidity: 6.0wt%), which was prepared using a malt vinegar brewed in accordance with the method prescribed in the same standard under section "2.6 malt vinegar", and adding spices thereto in accordance with the method prescribed in the same standard under section "2.8 spiced vinegar, flavoured vinegar".

A sample used as Example a3 was a distilled malt vinegar (acetic acid acidity: 5.0wt%), which was prepared in accordance with the method prescribed in the same standard under section "2.7 distilled malt vinegar".

A sample used as Comparative Example b1 was a grain vinegar (acetic acid acidity; 5.0wt%), which was brewed using rice as a raw material in accordance with the method prescribed in the same standard under section "2.5 grain vinegar", and a sample used as Comparative Example b8 was a malt vinegar (acetic acid acidity: 5.0wt%), which was brewed in accordance with the same standard under section "2.6 malt vinegar".

### Preparation of vinegars with the addition of relevant ingredients

A sample used as Comparative Example b2 was a spirit vinegar (acetic acid acidity: 5.0wt%), which was brewed in accordance with the same standard under section "2.4 spirit vinegar" ,by supplementing it with relevant ingredients in the respective concentrations indicated in Table 1.

Samples used as Example a4 and Comparative Examples b3, b4, b5, and b6 were prepared using a spirit vinegar (acetic acid acidity: 5.0%) brewed in accordance with the same standard under section "2.4 spirit vinegar", by supplementing it with relevant ingredients in the respective concentrations indicated in Table 1.

A sample used as Example a5 was prepared using the sample of Comparative Example b1, and samples used as Examples a6 and a7 were prepared using the sample of Example a1, by supplementing them with relevant ingredients in the respective concentrations indicated in Table 1.

A sample used as Comparative Example b7 was prepared using a same sample of Sample a2 by supplementing it with relevant ingredients in the respective concentrations indicated in Table 1.

Supplementation of relevant ingredients were carried out using the following standard reagents, optionally diluted with ethanol in high concentrations, to satisfy the concentrations shown in Table 1.
Diethyl succinate (CAS No. 123-25-1, Wako Pure Chemical Industries, Ltd.)
Benzaldehyde (CAS No. 100-52-7, Wako Pure Chemical Industries, Ltd.)
Phenethyl acetate (CAS No. 103-45-7, Wako Pure Chemical Industries, Ltd.)
Isoamyl acetate (CAS No. 123-92-2, Sigma-Aldrich Co.)

### Measurement of acetic acid acidity of the vinegar sample

Measurement of acetic acid acidity was carried out using an automatic titrator COM-1600 (Hiranuma Sangyo Co., Ltd.), by titrating the sample with 0.5 mol/L of sodium hydroxide solution until the pH value reached 8.2, determining the amount of acetic acid based on the amount of the sodium hydroxide solution used for neutralization so far, and calculating the acidity value from the determined amount of acetic acid.

### Determination of the amounts of diethyl succinate, benzaldehyde, phenethyl acetate, and isoamyl acetate in the vinegar sample

Determination of the amounts of diethyl succinate, benzaldehyde, phenethyl acetate, isoamyl acetate in the vinegar sample was carried out using a gas chromatography-mass spectroscopy (GC/MS) apparatus as follows:

Four grams of each vinegar sample was weighed as a measurement sample, which was placed in a test tube and combined with 1g of sodium chloride, and then with 4ml of dichloromethane (special grade reagent). The mixture was then shaken for 20 minutes using a shaking extractor to thereby extract ingredients in the sample into the dichloromethane layer.

The extraction liquid was centrifuged (3000rpm, 10min) to separate the dichloromethane layer, which was transferred into another test tube, dehydrated with an appropriate amount of sodium sulfate, and then stored in a vial as a sample for analysis.

One *microliterof* the sample for analysis was injected into the GC/MS apparatus via split injection method with a split ratio of 5:1.

Gas chromatography analysis was carried out using HP6890 Series GC System (Agilent Technologies, Inc.) equipped with capillary column DB-WAX (Agilent Technologies, Inc.) (internal diameter: 0.25mm; length: 30m; film thickness: 0.25µm). Injection was carried out with setting the temperature of the sample inlet of the gas chromatography analyzer at 250°C and using helium gas as the mobile phase. The column temperature was programmed to be maintained at 40°C for five minutes, then elevated at a rate of 5°C/min until reaching at 230°C, where it was maintained for 20 minutes. A mass spectrometer coupled to the gas chromatography analyzer was used to determine a mass-to-charge ratio (m/z) for each of peaks detected at different retention times for quantitation.

The mass spectrometer used for mass spectroscopy analysis was 5977B Mass Selective Detector (Agilent Technologies, Inc.), and the ionization was set to EI+ and fragmentor voltage was set to 70V. The analysis was carried out under the SIM mode, and the ions having the following mass-to-charge ratios (m/z) were used for quantitation and verification.
* Diethyl succinate: 129 for quantitation; 101,73 for verification
* Benzaldehyde: 106 for quantitation; 77,105 for verification
* Phenethyl acetate: 104 for quantitation; 91,105 for verification
* Isoamyl acetate: 87 for quantitation; 70,61 for verification

The quantities of diethyl succinate, benzaldehyde, phenethyl acetate, and isoamyl acetate were determined as follows: A diluted solution of the standard reagent of each compound used in the sample preparation for the Examples and the Comparative Examples was subjected to GC/MS analysis under the same conditions as those for the measurement samples to thereby yield a reference chromatogram. The chromatogram obtained for each measurement sample (hereinafter "sample chromatogram") was compared with the reference chromatogram of each compound, and the peak in the chromatogram for each sample having the closest retention time to that of the reference chromatogram of each compound was determined as the peak of the compound. The peak area of the ion for quantitation for each compound was compared between the sample chromatogram and the reference chromatogram, to thereby determine the quantity of the compound in each sample. Peaks having an S/N ratio (the ratio of a peak signal to a base noise) of less than 10 were determined as no-detection (ND), since they involve too much noise to be used for quantitation.

The concentrations of these compounds in each measurement sample are indicated in Table 1 below. The mark "-" in the table represents that the ingredient was not added.

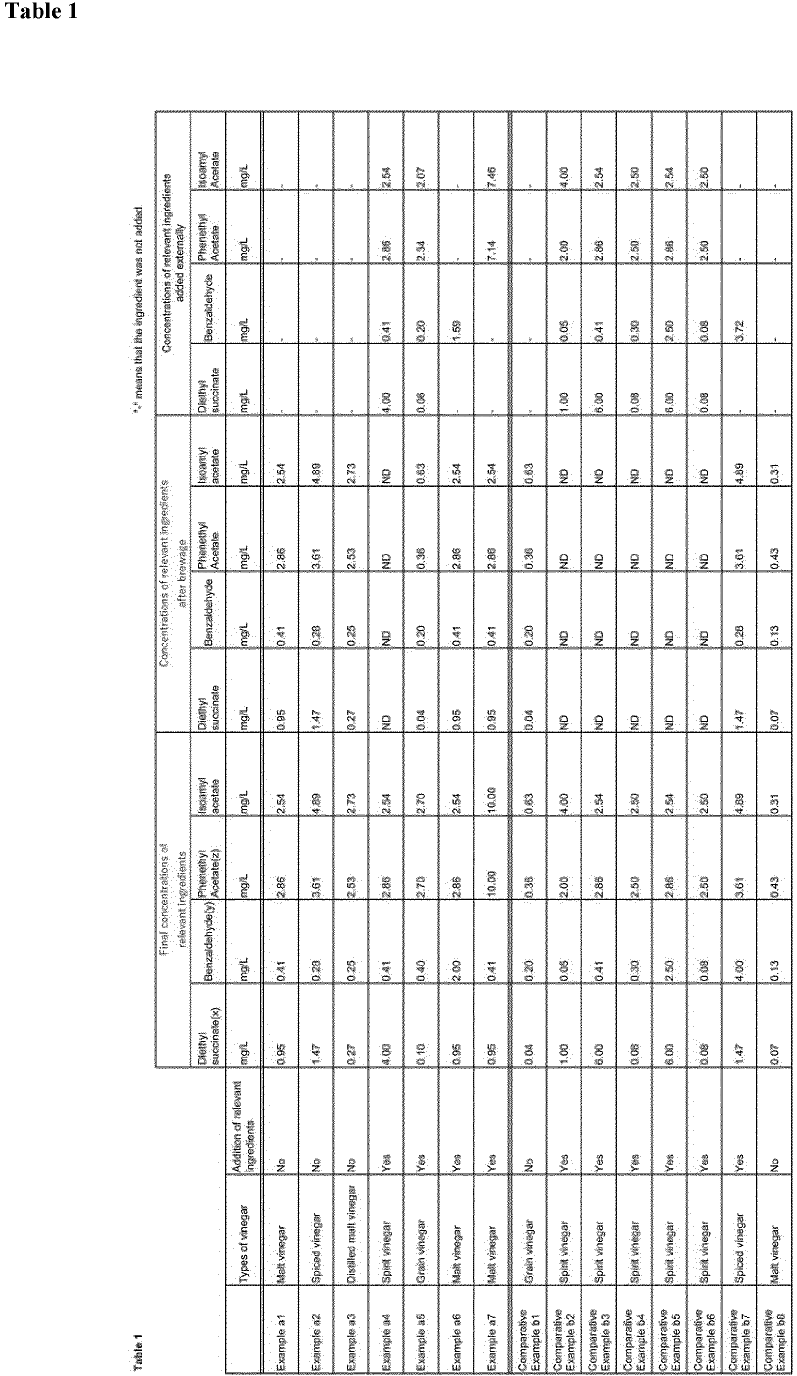

### Sensory evaluation of the samples

Sensory evaluation of each sample was carried out based on the average of evaluation scores given by six sensory evaluators in total.

The sensory evaluators were selected from candidates who performed significantly well in the distinguishing tests shown in A) and B) below:

A) Test for distinguishing taste qualities: candidates were tested as to whether they could distinguish test samples for five taste qualities (sweetness: the taste of sugar; sourness: the taste of tartaric acid; umami: the taste of sodium glutamate; saltiness: the taste of sodium chloride; and bitterness: the taste of caffeine) and two control samples. Each test sample was an aqueous solution of the corresponding standard substance at a concentration slightly higher than its threshold, while each control sample was distilled water.

B) Test for distinguishing taste strength: candidates were tested as to whether they could distinguish five aqueous solutions of sodium chloride at different concentrations and five aqueous solutions of acetic acid at different concentrations.

Each sample was evaluated for the following two evaluation items:

### * Vinegar flavor

5: Excellent, as the flavor characteristic of vinegar was strongly scented, while the pungent smell characteristic of vinegar was almost totally suppressed.
4: Good, as the vinegar flavor was significantly scented, while the pungent smell was significantly scented.
3: Acceptable, as the vinegar flavor was scented, while the pungent smell was somewhat reduced.
2: Not very good, as the vinegar flavor was not scented, although the pungent smell was slightly reduced.
1: Not good, as the pungent smell was strongly scented.

### * Aged taste

5: Excellent, as such a mellowed taste as if it had been aged for a long time was strongly scented. 4: Good, as the mellowed taste was significantly scented.
3: Acceptable, as the mellowed taste was somewhat scented.
2: Not very good, as the mellowed taste was not substantially scented.
1: Not good, as the mellowed taste was not scented at all.

The results of the sensory evaluation are shown in Table 2 below.

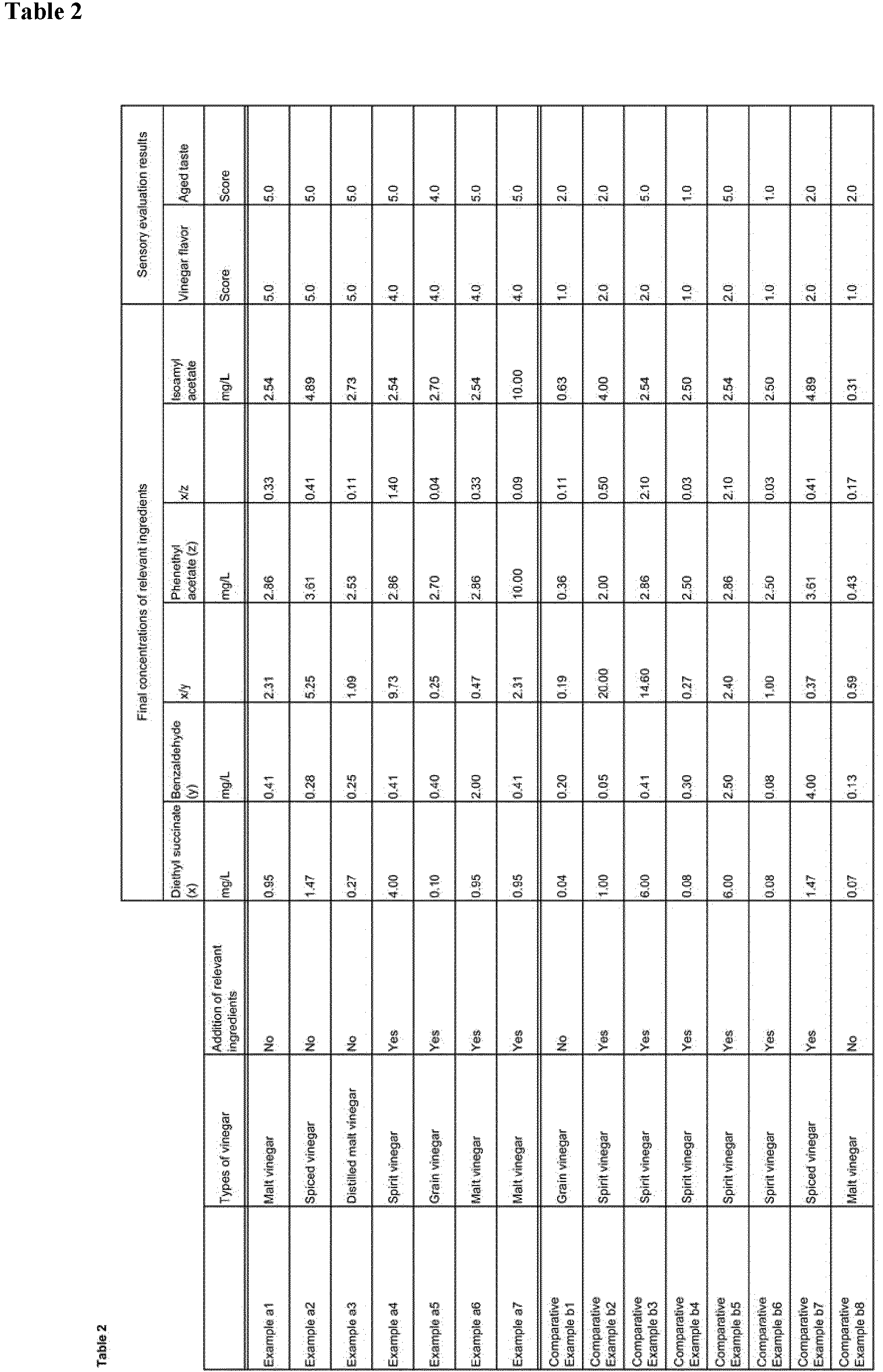

### Discussion

The samples of Examples a1 to a7 were evaluated very well, with average evaluation scores of four or higher for both the vinegar flavor and the aged taste. This means that the vinegar flavor and the mellowed taste were significantly scented, while the pungent smell was significantly scented for these samples. Especially well evaluated were the samples of Examples a1 to a3, which were brewed vinegars produced in accordance with the fermentation process, with average evaluation scores of five for both the vinegar flavor and the aged taste.

The samples of Comparative Examples b3 and b5 were evaluated well for the aged taste with an average score of five, but poorly evaluated for the vinegar flavor with an average score of two. This means that the vinegar flavor was not scented, and the pungent smell was not substantially reduced for these samples. Although the reasons for these evaluations are not clear, it is possible that the concentrations of diethyl succinate in these samples were so high that not only the pungent smell but also the vinegar flavor was suppressed.

The samples of Comparative Examples b1, b2, b4, b6, and b8 were poorly evaluated, with average scores of two or one for both the vinegar flavor and the aged taste. This means that the vinegar flavor and the mellowed taste were not scented, and the pungent smell was not substantially reduced for these samples.

The samples of Comparative Example b7 were poorly evaluated, with average scores of two for both the vinegar flavor and the aged taste. This means that the vinegar flavor and the mellowed taste were not scented, and the pungent smell was not substantially reduced for these samples.

## Claims

1. A vinegar composition produced from distilled alcohol and/or grain and/or malt via fermentation, comprising:
(a) diethyl succinate (x) in an amount of from 0.10 mg/L to 4.0 mg/L; and
(b) benzaldehyde (y) in an amount of from 0.15 mg/L to 2.0 mg/L.

2. The composition according to claim 1, wherein the weight ratio of diethyl succinate to benzaldehyde (x/y) is within a range of from 0.1 to 20.

3. The composition according to claim 1 or 2, further comprising:
(c) phenethyl acetate (z) in an amount of from 1.5mg/L to 10mg/L.

4. The composition according to any one of the previous claims, wherein the weight ratio of diethyl succinate to phenethyl acetate (x/z) is within a range of from 0.04 to 2.00.

5. The composition according to any one of the previous claims, wherein the fermentation is acetic acid fermentation.

6. A process for producing a vinegar composition from distilled alcohol and/or grain and/or malt via fermentation, comprising adjusting:
(a) the amount of diethyl succinate (x) to within a range of from 0.10 mg/L to 4.0 mg/L; and
(b) the amount of benzaldehyde (y) to within a range of from 0.20 mg/L to 2.0 mg/L.

7. The process according to claim 6, wherein the weight ratio of diethyl succinate to benzaldehyde (x/y) is adjusted to within a range of from 0.1 to 20.

8. The process according to claim 6 or 7, wherein
(c) the amount of phenethyl acetate (z) is adjusted to within a range of from 1.5mg/L to 10mg/L.

9. The process according to any one of claims 6 to 8, wherein the weight ratio of diethyl succinate to phenethyl acetate (x/z) is adjusted to within a range of from 0.04 to 2.00.

10. The process according to any one of claims 6 to 9, wherein the fermentation is acetic acid fermentation.

11. Use of:
(a) diethyl succinate (x) in an amount of from 0.10 mg/L to 4.0 mg/L; and
(b) benzaldehyde (y) in an amount of from 0.15 mg/L to 2.0 mg/L to reduce pungent smell and to provide aged taste in a vinegar composition.

12. The use according to claim 11, wherein the weight ratio of diethyl succinate to benzaldehyde (x/y) is within a range of from 0.1 to 20.

13. The use according to claim 11 or 12, further comprising the use of:
(c) phenethyl acetate (z) in an amount of from 1.5mg/L to 10mg/L.

14. The use according to any one of claims 11 to 13, wherein the weight ratio of diethyl succinate to phenethyl acetate (x/z) is within a range of from 0.04 to 2.00.

15. The use according to any one of claims 11 to 14, wherein the vinegar is derived from distilled alcohol and/or grain and/or malt.

16. The use according to any one of claims 11 to 15, wherein the vinegar is produced via fermentation.

17. The use according to any one of claim 16, wherein the fermentation is acetic acid fermentation.

## Patentansprüche

1. Essigzusammensetzung, die aus destilliertem Alkohol und/oder Getreide und/oder Malz durch Fermentation hergestellt wird, umfassend:
(a) Diethylsuccinat (x) in einer Menge von 0,10 mg/l bis 4,0 mg/l; und
(b) Benzaldehyd (y) in einer Menge von 0,15 mg/l bis 2,0 mg/l.

2. Zusammensetzung nach Anspruch 1, wobei das Gewichtsverhältnis von Diethylsuccinat zu Benzaldehyd (x/y) in einem Bereich von 0,1 bis 20 liegt.

3. Zusammensetzung nach Anspruch 1 oder 2, ferner umfassend:
(c) Phenethylacetat (z) in einer Menge von 1,5 mg/l bis 10 mg/l.

4. Zusammensetzung nach einem der vorhergehenden Ansprüche, wobei das Gewichtsverhältnis von Diethylsuccinat zu Phenethylacetat (x/z) in einem Bereich von 0,04 bis 2,00 liegt.

5. Zusammensetzung nach einem der vorhergehenden Ansprüche, wobei die Fermentation eine Essigsäurefermentation ist.

6. Verfahren zur Herstellung einer Essigzusammensetzung aus destilliertem Alkohol und/oder Getreide und/oder Malz durch Fermentation, umfassend einem Einstellen von:
(a) der Menge an Diethylsuccinat (x) auf einen Bereich von 0,10 mg/l bis 4,0 mg/l; und
(b) der Menge an Benzaldehyd (y) auf einen Bereich von 0,20 mg/l bis 2,0 mg/l.

7. Verfahren nach Anspruch 6, wobei das Gewichtsverhältnis von Diethylsuccinat zu Benzaldehyd (x/y) auf einen Bereich von 0,1 bis 20 eingestellt wird.

8. Verfahren nach Anspruch 6 oder 7, wobei
(c) die Menge an Phenethylacetat (z) auf einen Bereich von 1,5 mg/l bis 10 mg/l eingestellt wird.

9. Verfahren nach einem der Ansprüche 6 bis 8, wobei das Gewichtsverhältnis von Diethylsuccinat zu Phenethylacetat (x/z) auf einen Bereich von 0,04 bis 2,00 eingestellt wird.

10. Verfahren nach einem der Ansprüche 6 bis 9, wobei die Fermentation eine Essigsäurefermentation ist.

11. Verwendung von:
(a) Diethylsuccinat (x) in einer Menge von 0,10 mg/l bis 4,0 mg/l; und
(b) Benzaldehyd (y) in einer Menge von 0,15 mg/l bis 2,0 mg/l, um stechenden Geruch zu reduzieren und einen gealterten Geschmack in einer Essigzusammensetzung bereitzustellen.

12. Verwendung nach Anspruch 11, wobei das Gewichtsverhältnis von Diethylsuccinat zu Benzaldehyd (x/y) in einem Bereich von 0,1 bis 20 liegt.

13. Verwendung nach Anspruch 11 oder 12, ferner umfassend die Verwendung von:
(c) Phenethylacetat (z) in einer Menge von 1,5 mg/l bis 10 mg/l.

14. Verwendung nach einem der Ansprüche 11 bis 13, wobei das Gewichtsverhältnis von Diethylsuccinat zu Phenethylacetat (x/z) in einem Bereich von 0,04 bis 2,00 liegt.

15. Verwendung nach einem der Ansprüche 11 bis 14, wobei der Essig aus destilliertem Alkohol und/oder Getreide und/oder Malz gewonnen wird.

16. Verwendung nach einem der Ansprüche 11 bis 15, wobei der Essig durch Fermentation hergestellt wird.

17. Verwendung nach einem von Anspruch 16, wobei die Fermentation eine Essigsäurefermentation ist.

## Revendications

1. Composition de vinaigre produite à partir d'alcool distillé et/ou de grain et/ou de malt via fermentation, comprenant :
(a) du succinate de diéthyle (x) en une quantité de 0,10 mg/l à 4,0 mg/l ; et
(b) du benzaldéhyde (y) en une quantité de 0,15 mg/l à 2,0 mg/l.

2. Composition selon la revendication 1, dans laquelle le rapport en poids du succinate de diéthyle au benzaldéhyde (x/y) est situé dans la plage allant de 0,1 à 20.

3. Composition selon la revendication 1 ou 2, comprenant en outre :
(c) de l'acétate de phénéthyle (z) en une quantité de 1,5 mg/l à 10 mg/l.

4. Composition selon l'une quelconque des revendications précédentes, dans laquelle le rapport en poids du succinate de diéthyle à l'acétate de phénéthyle (x/z) est situé dans la plage allant de 0,04 à 2,00.

5. Composition selon l'une quelconque des revendications précédentes, dans laquelle la fermentation est une fermentation à l'acide acétique.

6. Procédé pour produire une composition de vinaigre à partir d'alcool distillé et/ou de grain et/ou de malt via fermentation, comprenant l'ajustement :
(a) de la quantité de succinate de diéthyle (x) dans la plage allant de 0,10 mg/l à 4,0 mg/l ; et
(b) de la quantité de benzaldéhyde (y) dans la plage allant de 0,20 mg/l à 2,0 mg/l.

7. Procédé selon la revendication 6, dans lequel le rapport en poids du succinate de diéthyle au benzaldéhyde (x/y) est ajusté dans la plage allant de 0,1 à 20.

8. Procédé selon la revendication 6 ou 7, dans lequel
(c) la quantité d'acétate de phénéthyle (z) est ajustée dans la plage allant de 1,5 mg/l à 10 mg/l.

9. Procédé selon l'une quelconque des revendications 6 à 8, dans lequel le rapport en poids du succinate de diéthyle à l'acétate de phénéthyle (x/z) est ajusté dans la plage allant de 0,04 à 2,00.

10. Procédé selon l'une quelconque des revendications 6 à 9, dans lequel la fermentation est une fermentation à l'acide acétique.

11. Utilisation de :
(a) succinate de diéthyle (x) en une quantité de 0,10 mg/l à 4,0 mg/l ; et
(b) benzaldéhyde (y) en une quantité de 0,15 mg/l à 2,0 mg/l pour réduire l'odeur âcre et conférer un goût vieilli dans une composition de vinaigre.

12. Utilisation selon la revendication 11, dans laquelle le rapport en poids du succinate de diéthyle au benzaldéhyde (x/y) est situé dans la plage allant de 0,1 à 20.

13. Utilisation selon la revendication 11 ou 12, comprenant en outre l'utilisation de :
(c) acétate de phénéthyle (z) en une quantité de 1,5 mg/l à 10 mg/l.

14. Utilisation selon l'une quelconque des revendications 11 à 13, dans laquelle le rapport en poids du succinate de diéthyle à l'acétate de phénéthyle (x/z) est situé dans la plage allant de 0,04 à 2,00.

15. Utilisation selon l'une quelconque des revendications 11 à 14, dans laquelle le vinaigre dérive d'alcool distillé et/ou de grain et/ou de malt.

16. Utilisation selon l'une quelconque des revendications 11 à 15, dans laquelle le vinaigre est produit via fermentation.

17. Utilisation selon la revendication 16, dans laquelle la fermentation est une fermentation à l'acide acétique.
